# EUROPÄISCHE PATENTSCHRIFT

(11) **EP 1 877 603 B1**
(45) Veröffentlichungstag und Bekanntmachung des Hinweises auf die Patenterteilung: **02.06.2010**
(21) Anmeldenummer: 06724489.7
(22) Anmeldetag: 21.04.2006
(51) Int. Cl.: D01G 1/04, G01H 1/00

(54) **FASERKABEL-SCHNEIDVORRICHTUNG**
FIBRE CABLE CUTTING DEVICE
DISPOSITIF SERVANT A COUPER UN CABLE A FIBRE OPTIQUE

(30) Priorität: 26.04.2005 DE 102005019263
(43) Veröffentlichungstag der Anmeldung: 16.01.2008
(73) Patentinhaber: Oerlikon Textile GmbH & Co. KG, 42897 Remscheid (DE)
(72) Erfinder: VOIGTLÄNDER, Carsten, 23795 Klein Rönnau (DE); STREBE, Matthias, 24539 Neumünster (DE)
(74) Vertreter: Kahlhöfer, Hermann
(86) Internationale Anmeldenummer: PCT/EP2006/003674
(87) Internationale Veröffentlichungsnummer: WO 2006/114242

(56) Entgegenhaltungen:
- DE-A1- 4 023 663
- DE-A1- 4 116 345
- DE-A1- 10 242 553
- DE-A1- 19 950 215
- DE-C1- 3 627 796
- US-A- 4 758 964

## Beschreibung

Die Erfindung betrifft eine Vorrichtung zum Schneiden eines Faserkabels gemäß dem Oberbegriff des Anspruchs 1.

Eine gattungsgemäße Vorrichtung zum Schneiden eines Faserkabels ist aus der Patentanmeldung EP 0 305 057 A2 bekannt. Hierbei wird ein Faserkabel zwischen zwei abwälzenden Rädern hindurch geführt. Dabei weist eines der Räder, das als Messerträger fungiert, eine Vielzahl von Messerklingen auf, deren Schneidkanten senkrecht zur Laufrichtung des Faserkabels ausgerichtet sind. Die Funktion des zweiten Rades ist es, das Faserkabel an die Schneidkanten anzudrücken, so dass das Faserkabel in eine Vielzahl kleiner Abschnitte zerschnitten wird. Bei der in der Patentanmeldung EP 0 305 057 A2 gezeigten Vorrichtung sind die Drehachsen des Messerträgers und des Andrückrades parallel ausgerichtet, so dass die beiden Rädern auf ihrem Außenumfang abwälzenden. Die Schneidkanten der Messerklingen sind dabei tangential angeordnet.

Aus der Offenlegungsschrift DE 102 42 553 A1 hingegen ist eine andere Ausrichtung des Andrückrades gegenüber dem Messerträger gezeigt, bei der sich die Achsen unter einem spitzen Winkel schneiden. Hier wälzen die Stirnflächen des Andrückrades und des Messerträgers ab, während die Schneidkanten der Messerklingen hier radial angeordnet sind. Das Faserkabel wird hier zwischen den Stirnflächen hindurchgeführt und zerschnitten.

Grundsätzlich stellt sich beim Betrieb einer Vorrichtung zum Schneiden eines Faserkabels das Problem, dass die Schneidkanten der Messerklingen einem Verschleiß unterliegen. Dieser Verschleiß wird vor allem durch Hartstoffbeimengungen im Faserkabel bewirkt. Auch wenn es gängige Praxis ist, die Schneidkanten nach einer bestimmten Betriebsdauer zu wechseln, führt dies nicht zuletzt wegen der damit verbundenen Betriebsunterbrechung zu erhöhten Kosten. Es ist daher anzustreben, die Schneidkanten bedarfsgerecht zu wechseln. Dazu wird in der Patentanmeldung EP 0 305 057 A2 eine Kraftmesseinrichtung vorgeschlagen, mittels derer die zwischen Messerträger und Andrückrad wirkende Kraft gemessen wird. Eine signifikante Korrelation zwischen der gemessenen Kraft und dem Verschleiß der Schneidkanten vorausgesetzt, kann so der Verschleißzustand der Schneidkanten überwacht werden.

Bei der in der EP 0 305 057 A2 gezeigten Vorrichtung wird die Achse des Andrückrades in einer in Andrückrichtung beweglichen Schwinge gelagert. Dabei wird die Andrückkraft direkt durch einen im Kraftfluss angeordneten Kraftmesssensor geleitet, der die Andrückkraft misst.

Bei der Entwicklung von Vorrichtung zum Schneiden von Faserkabel hat sich gezeigt, dass die in der DE 102 42 553 A1 gezeigte Anordnung von Messerträger und Andrückrad Vorteile hat und somit bevorzugt wird. Es ist jedoch nicht möglich, eine ähnlich einfache und wirkungsvolle Kraftmesseinrichtung wie in der EP 0 305 057 A2 in dieser Anordnung zu integrieren. Darüber hinaus wirken zwischen Messerträger und Andrückrad Reibungskräfte, die das Messergebnis verfälschen. Dies trifft bei der bevorzugten Anordnung besonders zu.

Es ist daher Aufgabe der Erfindung, für die in der DE 102 42 553 A1 gezeigten Anordnung von Messerträger und Andrückrad eine einfache und wirkungsvolle Messeinrichtung bereitzustellen, die den Verschleiß der Schneidkanten erkennt. Diese Aufgabe wird erfindungsgemäß dadurch gelöst, dass der Messerträger mit einem aus einem oder mehreren Körperschallsensoren gebildeten Sensorsystem verbunden wird, die den während des Schnittvorganges emittierten Körperschall erfassen.

Unter Körperschall versteht man transiente Schallwellen, die sich im Bauteil ausbreiten. Angeregt werden die Schallwellen durch schlagartige Energiefreisetzung durch den Schnittvorgang der einzelnen Filamente des Faserkabels. Dieser Schnittvorgang der Filamente verursacht eine Körperschallemission in einem typischen Frequenzspektrum. Verändert sich nun die Beschaffenheit, insbesondere die Schärfe der Schneidkante aufgrund von Verschleiß oder die Form der Schneide aufgrund von partiellen Ausbrüchen, so hat dies einen Einfluss auf den emittierten Körperschall, der sich in seiner Energieverteilung im Frequenzspektrum ebenfalls verändert. Der Vorteil der Erfindung liegt darin, dass der Sensor einfach installiert werden kann, ohne dass er direkt oder indirekt im Kraftfluss vorgesehen sein muss. Vielmehr ist es ausreichend, wenn der Sensor gut Körperschall leitend mit den Messerklingen verbunden ist. Für die Körperschallmessung geeignet ist ein Schwingungssensor, der insbesondere im hochfrequenten Bereich die mechanischen Schwingungen in elektrische Signale umwandelt.

Daher sind ein oder mehrere Körperschallsensoren direkt mit dem Messerträger verbunden. Eine gut Körperschall leitende Verbindung mit den Messerklingen vorausgesetzt, kann so der durch den Schnittvorgang emittierte Körperschall sensiert werden.

In einer Ausführungsvariante ist jeder Messerklinge ein Sensor zugeordnet. Die ermöglicht eine gut Körperschall leitende Verbindung zwischen Messerklinge und Sensor aufgrund der räumlichen Nähe und dem Sensor. Zudem kann ein veränderliches Signal von einer einzelnen Messerklinge so besonders gut erkannt werden.

In einer anderen Ausführungsvariante ist je einer Gruppe von Messerklinge ein Sensor zugeordnet. Dies ermöglicht einen deutlich geringeren Aufwand an Sensoren.

In einer weiteren, besonders kostengünstigen Ausführungsvariante ist dem Messerträger ein gemeinsamer Sensor zugeordnet, der alle Messerklingen gleichzeitig überwacht. Diese Ausführungsvariante macht sich die Tatsache zunutze, dass im Betrieb immer nur ein Teil der Messerklingen am Schneidprozess beteiligt sind, wodurch trotzdem eine hinreichend genaue Messung möglich ist.

Eine vorteilhafte Weiterbildung der Erfindung sieht eine Verbindung des oder der Körperschallsensoren mit einem Auswertesystem vor. Dieses Auswertesystem überwacht das Signal des oder der Körperschallsensoren auf Merkmale, die bei einem Verschleiß der Schneidkanten oder bei einem Bruch einer Messerklinge auftreten. Ein Verfahren zum Überwachen des Zustandes der Messerklingen einer zuvor beschriebenen Vorrichtung mittels eines Körperschallsensors umfasst nach einer Messung des Körperschalls zunächst das Extrahieren einer Kenngröße, die den Schneidprozess repräsentiert. Welche Kenngröße hierzu besonders geeignet ist, ergibt sich in erster Linie aus der Bauweise des Messerträgers und der Anordnung des oder der Körperschallsensoren und kann von einem Fachmann für Signalverarbeitung experimentell bestimmt werden. Dabei sind insbesondere die Frequenzbereiche zu suchen, deren Signalstärke sich mit zunehmendem abrasiven Verschleiß oder durch kleine, partielle Ausbrüche der Messerklingen signifikant verändern. Gleiches gilt für die Frequenzbereiche, die sich bei einem Bruch einer Messerklinge dauerhaft oder aber kurzzeitig, hervorgerufen durch den Bruchvorgang, verändern. Bei der Auswahl der Frequenzbereiche sind störende Quellen von Körperschall, beispielsweise von Wälzlagern, zu berücksichtigen und gegebenenfalls von dem zu analysierenden Frequenzspektrum auszuschließen.

Die so gebildeten Kenngrößen, beispielsweise die Signalleistung innerhalb eines bestimmten Frequenzbandes, wird kontinuierlich mit einem Vergleichswert oder Vergleichsbereich vergleichen und bei Abweichungen wird eine Störung gemeldet.

In einer bevorzugten Erweiterung des Verfahrens wird als Vergleichswert der Kennwert vorangegangener Messungen, die derselben Messerklinge zuzuordnen sind, verwendet. Dieser Kennwert kann beispielsweise aus dem Mittelwert der Messungen gebildet werden. So lassen sich langfristige Veränderungen der Schnittcharakteristik erkennen.

In einer weiteren bevorzugten Erweiterung des Verfahrens wird als Vergleichswert der Kennwert beziehungsweise der Mittelwert aus den Kennwerten vorangegangener Messungen, die einer oder mehreren vorhergehenden Umdrehungen des Messerträgers zuzuordnen sind, verwendet. So lässt sich beispielsweise bei einer periodischen Schwankung des Kennwertes synchron zur Drehzahl des Messerträgers auf einen Schneidenbruch schließen.

In einer Variante des Verfahrens entspringt das Messsignal je einem Sensor, der jeder Messerklinge zugeordnet ist.

In einer anderen Variante des Verfahrens entspringt das Messsignal je einem Sensor, der einer Gruppe von Messerklingen zugeordnet ist.

In einer weiteren Variante des Verfahrens entspringt das Messsignal genau einem Sensor, der dem gesamten Messerträger zugeordnet ist.

Ein Ausführungsbeispiel wird im Folgenden unter Hinweis auf die beigefügten Zeichnungen näher beschrieben.

Es stellen dar:
Fig. 1 eine Vorrichtung zum kontinuierlichen Schneiden eines Faserkabels,
Fig. 2 eine alternative Ausführungsform der Vorrichtung aus Figur 1.

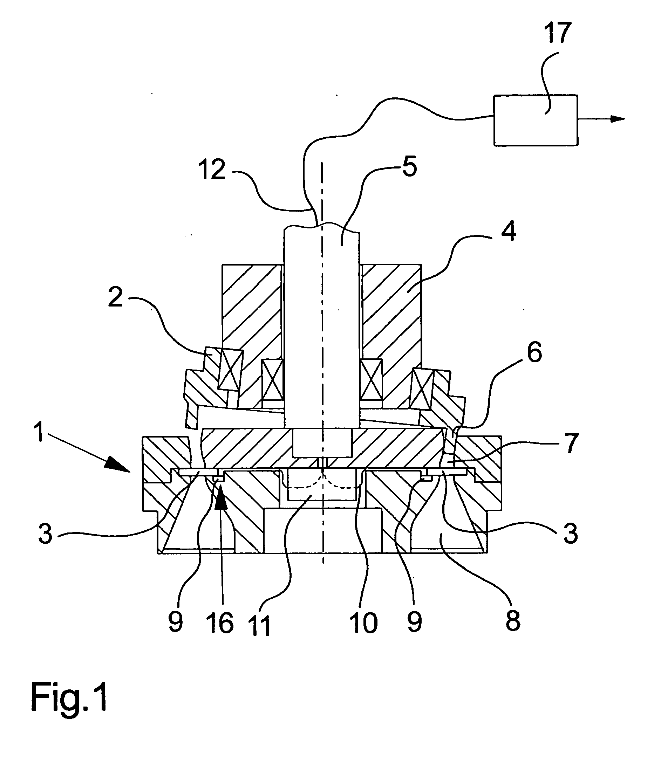

In Figur 1 ist eine erfindungsgemäße Vorrichtung zum kontinuierlichen Schneiden eines Faserkabels gezeigt. Die Vorrichtung besteht aus einem Messerträger 1 und einem mit dem Messerträger 1 zusammen wirkenden Andrückrad 2. Der Messerträger 1 weist eine Vielzahl von Messerklingen 3 zum Schneiden des Faserkabels auf. Dass hier nicht dargestellte Faserkabel wird in dem Faserkabelkanal 7 zwischen Andrückrad 2 und Messerträger 1 geführt, wobei das Andrückrad 2 mittels einer Andrückfläche 6 das Faserkabel gegen die Messerklingen 3 drückt. Messerträger 1 und Andrückrad 2 sind im wesentlichen koaxial, jedoch mit ihren Achsen in einem spitzen Winkel zueinander angeordnet auf einem gemeinsamen Träger 4 drehbar gelagert. Eine hier nicht dargestellte Antriebseinrichtung bewirkt, dass der durch den Antrieb 5 angetriebene Messerträger 1 und das Andrückrad 2 synchron drehen. Auf Grund dieser Anordnung wälzen die Stirnflächen des Messerträgers 1 und des Andrückrades 2 aufeinander ab und wirken so zusammen. Durch eine andere Anordnung der Achsen zueinander können auch beispielsweise Umfangsfläche und Stirnfläche oder aber beide Stirnflächen aufeinander abwälzen.

Das Faserkabel wird in einer frei zugänglichen Stelle in den Faserkabelkanal 7 eingeführt. Im Verlauf der Drehung des Messerträgers 1 wird das Faserkabel durch die Andrückfläche 6 gegen die Messerklingen 3 gedrückt, wodurch das Faserkabel in eine Vielzahl von Abschnitten zerschnitten wird, deren Länge dem Abstand der Messerklingen 3 voneinander entspricht. Die so geschnittenen Abschnitte fallen durch eine Öffnung 8 nach unten und werden einer Weiterverarbeitung zugeführt.

Die Messerklingen 3 stehen hier in einem direkten Kontakt mit je einem Sensor 9 oder in einer alternativen Ausführungsform mit einem Sensor 9, der mehreren Messerklingen 3 zugeordnet ist. Die Sensoren 9 weisen jeweils eine Anschlussleitung 10 auf, die in einem Verteilerkasten 11 zusammengefasst und mit einer Anschlussleitung 12 verbunden sind. Die Sensoren 9 bilden zusammen das Sensorsystem 16. Die Signale des Sensorsystems 16 werden zur Signalverarbeitung an ein Auswertesystem 17 weiterführt.

Durch den Schnittvorgang, insbesondere durch das Trennen der Filamente des Faserkabels wird schlagartig Energie freigesetzt, die zu transienten hochfrequenten Körperschallwellen führt. Diese Körperschallwellen werden direkt am Ort des Entstehens von den Sensoren 9 erfasst.

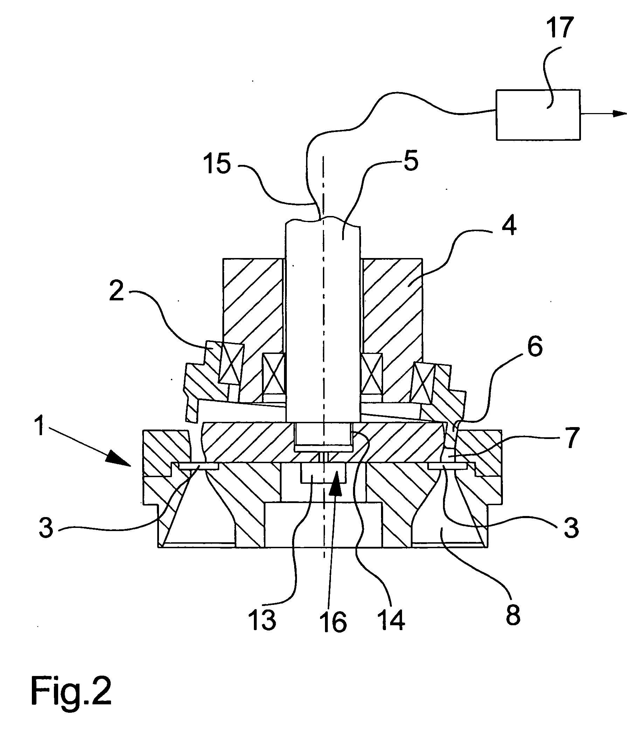

In Figur 2 ist eine alternative Ausführungsform der Vorrichtung dargestellt. Zur Vereinfachung wird hier nur auf die Unterschiede zu der in Figur 1 dargestellten Vorrichtung eingegangen.

Anstelle der Vielzahl von Sensoren 9 wird hier das Sensorsystem 16 durch einen einzelnen zentralen Sensor 13 gebildet, der den Körperschall von allen momentan am Schnittprozess beteiligten Messerklingen 3 erfasst und über die Anschlussleitung 1 die Sensorsignale zur Signalverarbeitung an das Auswertesystem 17 weiterführt. Der Sensor 13 ist hier zwar in einer gewissen Entfernung von den Messerklingen 3 vorsehen, ist aber im Sinne einer Körperschallausbreitung günstig ohne dämpfende Bauteile mit den Messerklingen 3 verbunden. Der Vorteil dieser Ausführungsform ist, dass hier nur ein einziger Körperschallsensor eingesetzt wird. Um trotzdem eine hohe Empfindlichkeit sicherzustellen, wird störender Körperschall von anderen Quellen, wie beispielsweise Wälzlagern, durch eine dämpfende Hülse 14 abgeschirmt.

### Bezugszeichenliste

- 1: Messerträger
- 2: Andrückrad
- 3: Messerklingen
- 4: Träger
- 5: Antrieb
- 6: Andrückfläche
- 7: Faserkabelkanal
- 8: Öffnung
- 9: Sensor
- 10: Anschlussleitung
- 11: Verteilerkasten
- 12: Sammelleitung
- 13: Sensor
- 14: Hülse
- 15: Anschlussleitung
- 16: Sensorsystem
- 17: Auswertesystem

## Patentansprüche

1. Vorrichtung zum kontinuierlichen Schneiden eines Faserkabels in Abschnitte, mit einem drehbaren Messerträger (1) zur Aufnahme einer Vielzahl von Messerklingen (3), mit einem drehbar gelagerten Andrückrad (2) zum Andrücken des zwischen Messerträger (1) und Andrückrad (2) geführten Faserkabels an die Messerklingen (3), und mit einem Sensorsystem (16) zum Erfassen des Zustandes der Messerklingen (3), **dadurch gekennzeichnet, dass** das Sensorsystem (16) auf einem oder mehreren Körperschallsensoren (9, 13) zur Messung des während des Schneidprozesses emittierten Körperschalls basiert und der oder die Körperschallsensoren (9, 13) mit dem Messerträger (1) verbunden sind.

2. Vorrichtung nach Anspruch 1, **dadurch gekennzeichnet, dass** ein Körperschallsensor (9) genau einer Messerklinge (3) zugeordnet ist.

3. Vorrichtung nach Anspruch 1, **dadurch gekennzeichnet, dass** ein Körperschallsensor (9) mehreren Messerklingen (3) zugeordnet ist.

4. Vorrichtung nach Anspruch 1, **dadurch gekennzeichnet, dass** ein Körperschallsensor (13) dem Messerträger (1) zugeordnet ist.

5. Vorrichtung nach Anspruch 1, **dadurch gekennzeichnet, dass** das Sensorsystem (16) mit einem Auswertesystem (17) zum Detektieren einer Störung verbunden ist.

6. Vorrichtung nach Anspruch 5, **dadurch gekennzeichnet, dass** das Auswertesystem als Störung den Bruch einer Messerklinge (3) erkennt.

7. Vorrichtung nach Anspruch 5 oder 6, **dadurch gekennzeichnet, dass** das Auswertesystem als Störung den Verschleiß einer Messerklinge (3) erkennt.

8. Verfahren zum Überwachen des Zustandes der Messerklingen (3) einer Vorrichtung zum kontinuierlichen Schneiden eines Faserkabels in Abschnitte, wobei die Vorrichtung einen drehbaren Messerträger (1) zur Aufnahme einer Vielzahl von Messerklingen (3), ein drehbar gelagertes Andrückrad (2) zum Andrücken des zwischen Messerträger (1) und Andrückrad (2) geführten Faserkabels an die Messerklingen (3), und ein auf der Messung des während des Schneidprozesses emittierten Körperschalls basierendes Sensorsystem (16) zum Erfassen des Zustandes der Messerklingen (3) mit einem oder mehrere Körperschallsensoren (9, 13), die mit dem Messträger (1) verbunden sind enthält, umfassend die Verfahrensschritte
- Messen des durch den Schnittvorgang emittierten Körperschalls,
- Extrahieren einer charakteristischen Kenngröße,
- Vergleich der Kenngröße mit einem Vergleichswert,
- Meldung eines Fehlers bei Abweichung vom Vergleichswert.

9. Verfahren nach Anspruch 8, **dadurch gekennzeichnet, dass** bei Extrahieren der charakteristische Kenngröße eine Frequenzanalyse verwendet wird.

10. Verfahren nach Anspruch 8 oder 9, **dadurch gekennzeichnet, dass** die charakteristische Kenngröße den Schnittvorgang mit korrekter Schneide repräsentiert und dass bei der Abweichung vom Vergleichswert ein Klingenbruch erkannt wird.

11. Verfahren nach Anspruch 8 oder 9, **dadurch gekennzeichnet, dass** die charakteristische Kenngröße den Schnittvorgang mit scharfer oder stumpfer Klinge repräsentiert und dass bei der Abweichung vom Vergleichswert der Fortschritt des Klingenverschleißes erkannt wird.

12. Verfahren nach einem der Ansprüche 8 bis 11, **dadurch gekennzeichnet, dass** der Vergleichswert aus den charakteristischen Kenngrößen vorangegangener Messungen gebildet wird.

13. Verfahren nach der Anspruch 12, **dadurch gekennzeichnet, dass** diejenigen vorangegangenen Messungen verwendet werden, die derselben Messerklinge (3) zuzuordnen sind.

14. Verfahren nach der Anspruch 12, **dadurch gekennzeichnet, dass** die vorangegangenen Messungen von einer oder mehreren Umdrehungen des Messerträgers (1) verwendet werden.

15. Verfahren nach einem der Ansprüche 8 bis 14, **dadurch gekennzeichnet, dass** das Sensorsystem (16) einen Sensor (9) pro Messerklinge (3) aufweist.

16. Verfahren nach einem der Ansprüche 8 bis 14, **dadurch gekennzeichnet, dass** das Sensorsystem (16) einen Sensor (9) für mehrere Messerklingen (3) aufweist.

17. Verfahren nach einem der Ansprüche 8 bis 14, **dadurch gekennzeichnet, dass** das Sensorsystem (16) einen dem Messerträger (1) zugeordneten Sensor (13) aufweist, mit dem der Körperschall aller Messerklingen (3) erfasst wird.

## Claims

1. A device for continuously cutting a fiber cable into sections, having a rotatable cutter carrier (1) for holding a plurality of cutter blades (3), having a rotatably mounted pressing wheel (2) for pressing the fiber cable, which is guided between the cutter carrier (1) and pressing wheel (2), against the cutter blades (3), and having a sensor system (16) for sensing the state of the cutter blades (3), **characterized in that** the sensor system (16) is based on one or more solid-borne sound sensors (9, 13) for measuring the solid-borne sound which is emitted during the cutting process and **in that** the solid-borne sound sensor or sensors (9, 13) are connected to the cutter carrier (1).

2. The device as claimed in claim 1, **characterized in that** a solid-borne sound sensor (9) is assigned precisely to a cutter blade (3).

3. The device as claimed in claim 1, **characterized in that** a solid-borne sound sensor (9) is assigned to a plurality of cutter blades (3).

4. The device as claimed in claim 1, **characterized in that** a solid-borne sound sensor (13) is assigned to the cutter carrier (1).

5. The device as claimed in claim 1, **characterized in that** the sensor system (16) is connected to an evaluation system (17) for detecting a fault.

6. The device as claimed in claim 5, **characterized in that** the evaluation system detects the fracture of a cutter blade (3) as a fault.

7. The device as claimed in claim 5 or 6, **characterized in that** the evaluation system detects the wear of a cutter blade (3) as a fault.

8. A method for monitoring the state of the cutter blades (3) of a device for continuously cutting a fiber cable into sections, wherein the device contains a rotatable cutter carrier (1) for holding a plurality of cutter blades (3), a rotatably mounted pressing wheel (2) for compressing the fiber cable, which is guided between the cutter carrier (1) and pressing wheel (2), against the cutter blades (3), and having a sensor system (16) having one or more solid borne sound sensors (13) which are connected to the cutter carrier (1) which is based on the measurement of the solid-borne sound emitted during the cutting process and has the purpose of sensing the state of the cutter blades (3), comprising the method steps
- measurement of the solid-borne sound emitted by the cutting process,
- extraction of a characteristic variable,
- comparison of the characteristic variable with a comparison value, and
- signaling of a fault when there is a deviation from the comparison value.

9. The method as claimed in claim 8, **characterized in that** the frequency analysis is used when the characteristic variable is extracted.

10. The method as claimed in claim 8 or 9, **characterized in that** the characteristic variable represents the cutting process with a correct cutting edge, and **in that** a blade fracture is detected if there is a deviation from the comparison value.

11. The method as claimed in claim 8 or 9, **characterized in that** the characteristic variable represents the cutting process with a sharp or blunt blade, and **in that** the progress of the wear on the blade is detected when there is a deviation from the comparison value.

12. The method as claimed in one of claims 8 to 11, **characterized in that** the comparison value is formed from the characteristic variables of preceding measurements.

13. The method as claimed in claim 12, **characterized in that** the preceding measurements which are to be assigned to the same cutter blade (3) are used.

14. The method as claimed in claim 12, **characterized in that** the preceding measurements of one or more revolutions of the cutter carrier (1) are used.

15. The method as claimed in one of claims 8 to 14, **characterized in that** the sensor system (16) has one sensor (9) per cutter blade (3).

16. The method as claimed in one of claims 8 to 14, **characterized in that** the sensor system (16) has a sensor (9) for a plurality of cutter blades (3).

17. The method as claimed in one of claims 8 to 14, **characterized in that** the sensor system (16) has a sensor (13) which is assigned to the cutter carrier (1) and with which the solid-borne sound of all the cutter blades (3) is sensed.

## Revendications

1. Dispositif pour couper continuellement en tronçons un câble à fibres, avec un porte-couteau rotatif (1) pour recevoir une multiplicité de lames de couteaux (3), avec une roue à pression (2) supportée de façon rotative pour serrer le câble à fibres guidé entre le porte-couteau (1) et la roue à pression (2), contre les lames de couteaux (3), et avec un système de capteurs (16) pour détecter l'état des lames de couteaux (3), **caractérisé en ce que** le système de capteurs (16) est basé sur un capteur de bruits de structure ou sur une pluralité de capteurs de bruit de structure (9, 13) pour mesurer le bruit de structure qui a été émis durant les processus de coupe et le capteur/les capteurs de bruits de structure (9, 13) est connecté/sont connectés au porte-couteau (1).

2. Dispositif selon la revendication 1, **caractérisé en ce qu'**un capteur de bruit de structure (9) est associé exactement à une lame de couteau (3).

3. Dispositif selon la revendication 1, **caractérisé en ce qu'**un capteur de bruit de structure (9) est associé à plusieurs lames de couteaux (3).

4. Dispositif selon la revendication 1, **caractérisé en ce qu'**un capteur de bruit de structure (13) est associé au porte-couteau (1).

5. Dispositif selon la revendication 1, **caractérisé en ce que** le système de capteurs (16) est connecté à un système d'évaluation (17) pour détecter une erreur.

6. Dispositif selon la revendication 5, **caractérisé en ce que** le système d'évaluation reconnaît comme erreur la brisure d'une lame de couteau (3).

7. Dispositif selon la revendication 5 ou 6, **caractérisé en ce que** le système d'évaluation reconnaît comme erreur l'usure d'une lame de couteau (3).

8. Procédé pour contrôler l'état des lames des couteaux (3) d'un dispositif pour couper continuellement en tronçons un câble à fibres, le dispositif comprenant un porte-couteau rotatif (1) pour recevoir une multiplicité de lames de couteaux (3), une roue à pression (2) supportée de façon rotative pour serrer contre les lames de couteaux (3) le câble à fibres guidé entre le porte-couteau (1) et la roue à pression (2), et un système de capteurs (16) qui est basé sur la mesure du bruit de structure émis durant le processus de coupe et qui sert à détecter l'état des lames de couteau (3) avec un ou une pluralité de capteurs de bruits de structure (9, 13), qui sont connectés au porte-couteau (1), comprenant les étapes de procédé :
- mesurer le bruit de structure émit par le processus de coupe,
- extraire un paramètre caractéristique,
- comparer le paramètre avec une valeur de référence,
- annoncer une faute lorsqu'il y a une déviation par rapport à la valeur de référence.

9. Procédé selon la revendication 8, **caractérisé en ce que** lorsque le paramètre caractéristique est extrait une analyse fréquentielle est utilisée.

10. Procédé selon la revendication 8 ou 9, **caractérisé en ce que** le paramètre caractéristique représente le processus de coupe avec un tranchant correct et **en ce que** lorsqu'il y a une aberrance de la valeur de référence une fracture de la lame est reconnue.

11. Procédé selon la revendication 8 ou 9, **caractérisé en ce que** le paramètre caractéristique représente le processus de coupe avec une lame émoussée ou avec une lame non émoussée et **en ce que** lorsqu' il y a une déviation de la valeur de référence la progression de l'usure des lames est reconnue.

12. Procédé selon l'une des revendications 8 à 11, **caractérisé en ce que** la valeur de référence est formée à partir des paramètres caractéristiques de mesures précédentes.

13. Procédé selon la revendication 12, **caractérisé en ce que** l'on utilise les mesures précédentes qui sont associées à la même lame de couteau (3).

14. Procédé selon la revendication 12, **caractérisé en ce que** les mesures précédentes sont utilisées par une révolution ou une pluralité de révolutions du porte-couteaux (1).

15. Procédé selon l'une des revendications 8 à 14, **caractérisé en ce que** le système de capteur (16) dispose d'un capteur (9) par lame de couteau (3).

16. Procédé selon l'une des revendications 8 à 14, **caractérisé en ce que** le système de capteurs (16) a un capteur (9) pour une pluralité de lames (3).

17. Procédé selon l'une des revendications 8 à 14, **caractérisé en ce que** le système de capteurs (16) a un capteur (13) associé au porte-couteaux (1), avec lequel le bruit de structure de toutes les lames de couteaux (3) est capté.
